# FASCICULE DE BREVET EUROPEEN

(11) **EP 1 902 647 B1**
(45) Date de publication et mention de la délivrance du brevet: **09.11.2016**
(21) Numéro de dépôt: 07116991.6
(22) Date de dépôt: 21.09.2007
(51) Int. Cl.: A47B 37/02, B64D 11/00

(54) **INSTALLATION POUR PERMETTRE LE RACCORDEMENT À UNE BORNE FIXE DE DEUX CHARIOTS DE TRANSPORT DE PLATEAUX-REPAS**
ANLAGE ZUM ERMÖGLICHEN DES ANSCHLUSSES VON ZWEI MENÜWAGEN AN EINEN FESTANSCHLUSS
INSTALLATION ALLOWING THE CONNECTION TO A FIXED TERMINAL OF TWO CARTS FOR TRANSPORTING MEAL TRAYS

(30) Priorité: 22.09.2006 FR 0653909
(43) Date de publication de la demande: 26.03.2008
(73) Titulaire: Electro Calorique, 69330 Pusignan (FR)
(72) Inventeur: Brossat, Pierre, 69006 Lyon (FR)
(74) Mandataire: Thibault, Jean-Marc

(56) Documents cités:
- EP-A- 0 161 178
- WO-A-97/09575
- US-B1- 6 832 504

## Description

La présente invention concerne le domaine technique du transport et de la distribution de repas à l'aide de plateaux sur lesquels sont disposés des mets et divers ustensiles nécessaires à la consommation des aliments.

L'objet de l'invention trouve une application particulièrement avantageuse dans le domaine du transport et de la distribution de repas par exemple en milieu hospitalier.

D'une manière habituelle, un plateau-repas est destiné à recevoir des mets froids et chauds placés dans des récipients adaptés à la nature des aliments. Selon le procédé dit en liaison chaude, les mets chauds sont dès leur préparation acheminés et conservés à la température de consommation jusqu'au moment de leur distribution au consommateur. Dans le procédé dit en liaison froide, les mets chauds sont mis à la température de consommation juste avant leur distribution au consommateur dans la mesure où ils ont été rapidement refroidis dès la fin de leur préparation en vue d'un stockage au froid pouvant atteindre plusieurs jours.

Il est connu, dans l'état de la technique, différentes solutions de chariots permettant le transport et la distribution de plateaux-repas. D'une manière générale, un tel chariot de transport et de distribution comporte, par exemple comme illustré par le brevet US 3 275 393, deux compartiments séparés dont l'un est destiné à recevoir les plateaux pourvus des ustensiles et des mets froids, tandis que l'autre reçoit les récipients contenant les mets chauds. Le compartiment dit chaud est équipé de moyens de chauffage permettant de placer et de maintenir les denrées à leur température de consommation. Le compartiment dit froid est relié à une unité frigorifique embarquée comportant généralement un groupe compresseur, un condenseur et un évaporateur. Cette solution présente l'inconvénient de proposer des chariots particulièrement encombrants, lourds et coûteux en raison notamment du montage d'une unité de production de froid à l'intérieur de chaque chariot.

Dans le même sens, le brevet US 6 832 504 décrit une installation pour le maintien au froid de produits alimentaires placés dans des chariots raccordés à une unité de contrôle. Chaque chariot est équipé d'un échangeur de chaleur alimenté en fluide par des conduits raccordés à une unité frigorifique. L'échangeur de chaleur est associé à des moyens de mise en circulation de l'air à l'intérieur du chariot pour assurer son refroidissement. Un tel chariot présente également l'inconvénient d'être lourd, encombrant et coûteux en raison du montage d'une partie de l'installation frigorifique à l'intérieur du chariot.

Pour tenter de résoudre les problèmes énoncés ci-dessus, la demande de brevet EP 0 161 178 a proposé une installation comportant une borne fixe de production de froid et de chaud et sur laquelle est destiné à être raccordé au moins un chariot isotherme de transport et de distribution de repas. La borne fixe comporte un compartiment incluant une source d'air froid susceptible de pulser l'air à l'intérieur d'un compartiment inférieur du chariot dit froid lorsque ce dernier est accolé à la borne de production. Le compartiment inférieur qui s'ouvre sur une face du chariot est séparé, par une cloison horizontale, d'un compartiment supérieur dans lequel peut être pulsé de l'air chaud provenant de la borne fixe.

La cloison horizontale est pourvue d'une ouverture obturable par un registre réglant la communication entre les compartiments inférieur et supérieur en vue de permettre de mettre en oeuvre des modes de réfrigération simple ou double. En effet, dans certains cas d'utilisation, il s'avère nécessaire de mettre en oeuvre une réfrigération simple consistant à raccorder à la source froide uniquement le compartiment froid. Dans ce cas, le compartiment chaud n'est pas relié à la source froide préalablement à son raccordement à la source chaude.

Dans d'autres cas d'utilisation, il s'avère nécessaire de mettre en oeuvre un mode double réfrigération pour lequel les compartiments chaud et froid sont reliés simultanément à la source froide. Le compartiment chaud n'est plus relié à la source froide lorsque les mets placés dans le compartiment chaud doivent être remis en température.

Le passage d'un mode de fonctionnement à l'autre nécessite la manipulation du registre. Il apparaît donc que l'installation décrite par cette demande de brevet ne permet pas d'assurer une régulation automatique de la température à l'intérieur des compartiments en fonction du mode de réfrigération souhaité. De plus, l'installation nécessite la manipulation des plats pour reconstituer les plateaux-repas. En définitive, une telle installation ne se trouve pas adaptée pour recevoir des plateaux-repas superposés dont une partie supporte les mets chauds tandis que l'autre partie supporte les mets froids. Il s'avère également que la borne fixe décrite par ce document ne peut recevoir qu'un seul format de chariot. Enfin, une telle installation présente un encombrement relativement important et une difficulté de mise en oeuvre.

La présente invention vise donc à remédier aux inconvénients énoncés ci-dessus en proposant une installation adaptée pour permettre le maintien au froid de mets placés sur des plateaux-repas, conçue pour être peu onéreuse tout en offrant la possibilité de permettre une régulation automatique de la température à l'intérieur des chariots.

Pour atteindre un tel objectif, l'installation pour au moins le maintien au froid de mets placés sur des plateaux-repas, est définie dans la revendication 1 et comporte:
- au moins deux chariots isothermes de transports de plateaux repas comprenant chacun :
   - une enveloppe isolante délimitant au moins une enceinte accessible par au moins une porte et présentant au moins un compartiment froid, cette enceinte étant munie intérieurement de moyens de support en position superposée de plateaux-repas,
- une borne fixe comportant une unité frigorifique et une unité de commande et de régulation du froid.

Selon l'invention, chaque chariot est équipé sur l'une de ses faces :
- d'au moins une bouche d'entrée d'air et d'au moins une bouche de sortie d'air communiquant par des gaines, avec le compartiment froid,
- et des moyens d'accouplement temporaire avec la borne fixe,
   - la borne fixe possède deux parois parallèles équipées chacune :
      - d'au moins une bouche de soufflage d'air froid complémentaire à la bouche d'entrée d'air d'un chariot, pour coopérer entre elles lors de l'accouplement d'un chariot avec la borne fixe, les bouches de soufflage communiquant par des canalisations avec l'unité frigorifique,
      - d'au moins une bouche d'aspiration d'air, complémentaire à la bouche de sortie d'air d'un chariot pour coopérer entre elles lors de l'accouplement d'un chariot avec la borne fixe, les bouches d'aspiration d'air communiquant par des canalisations avec l'unité frigorifique,
      - des moyens d'accouplement temporaire complémentaires aux moyens d'accouplement temporaire d'un chariot, pour assurer le maintien d'un chariot dans une position fixe d'accouplement pour laquelle les bouches de soufflage et d'aspiration se trouvent raccordées de manière étanche respectivement avec les bouches d'entrée et de sortie,
   - l'unité de commande et de régulation assure la commande et la régulation pour l'un et/ou l'autre des chariots accouplé(s) à la borne fixe.

Selon une application préférée, chaque chariot comprend :
- une enceinte présentant le compartiment froid et un compartiment mixte froid ou chaud,
- des moyens de remise en température des plateaux repas, pour le compartiment mixte.

Selon une première variante de réalisation, la borne fixe comporte, sur chacune des deux parois parallèles, une bouche de soufflage d'air froid et une bouche d'aspiration d'air. Chaque chariot comporte une bouche d'entrée d'air communiquant par une gaine avec le compartiment froid qui communique par une gaine avec la bouche de sortie d'air.

Selon une deuxième variante de réalisation, la borne fixe comporte :
- sur chacune de deux parois parallèles, deux bouches de soufflage d'air froid et deux bouches d'aspiration d'air,
- des moyens d'obturation commandée d'une bouche de soufflage et d'une bouche d'aspiration destinées à communiquer avec le compartiment mixte d'un chariot,
   et chaque chariot comporte deux bouches d'entrée d'air dont l'une communique par une gaine avec le compartiment froid qui communique par une gaine avec une bouche de sortie d'air, l'autre bouche d'entrée d'air communiquant par une gaine avec le compartiment mixte qui communique par une gaine avec l'autre bouche de sortie d'air.

Selon une caractéristique avantageuse, la borne fixe comprend pour chacun des moyens d'accouplement temporaire, un moyen de détection de la présence d'un chariot, adapté pour permettre de piloter automatiquement le fonctionnement des moyens d'accouplement temporaire complémentaire lors de la détection d'un chariot en position d'être verrouillé avec la borne fixe.

Avantageusement, la borne fixe comporte des bouchons d'obturation des bouches de soufflage et d'aspiration et des trappes d'obturation des bouches d'entrée et de sortie.

Selon une variante de réalisation, les moyens de remise en température des plateaux-repas sont réalisés par des plaques de chauffage du type à induction ou à résistance électrique.

Selon une variante de réalisation, les bouches de soufflage et d'aspiration sont situées selon une disposition de symétrie centrale par rapport au plan de symétrie parallèle aux parois parallèles s'étendant de manière opposée, tandis que les bouches d'entrée et de sortie sont décalées par rapport au milieu du chariot de manière à permettre leur raccordement respectivement des bouches de soufflage et d'aspiration de l'une ou de l'autre des parois de la borne fixe.

Selon une autre variante de réalisation, les bouches de soufflage et d'aspiration sont situées selon une disposition de symétrie axiale par rapport au plan de symétrie parallèle aux parois latérales.

Selon une autre variante de réalisation, les deux parois parallèles sont montées l'une à côté de l'autre.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective d'une première variante de réalisation d'une installation conforme à l'invention avec deux chariots accolés à une borne fixe.
La **Figure 2** est une vue analogue à la **Fig. 1** montrant une installation avec deux chariots dissociés de la borne fixe.
Les **Figures 3** et **4** sont des vues en perspective partielle montrant des caractéristiques de la borne fixe.
La **Figure 5** est un schéma illustrant le principe d'une installation conforme à l'invention.
La **Figure 6** illustre un mode de réalisation de la borne fixe décrite aux **Fig. 1** à **5****.**
La **Figure 7** illustre une autre variante de réalisation d'une installation conforme à l'invention permettant la mise en oeuvre en particulier du principe de fonctionnement en double réfrigération.
La **Figure 8** est un schéma illustrant le principe de fonctionnement de l'installation illustrée à la **Fig. 7****.**
La **Figure 9** illustre un autre mode de réalisation de la borne fixe décrite aux Fig. **6** et **7****.**

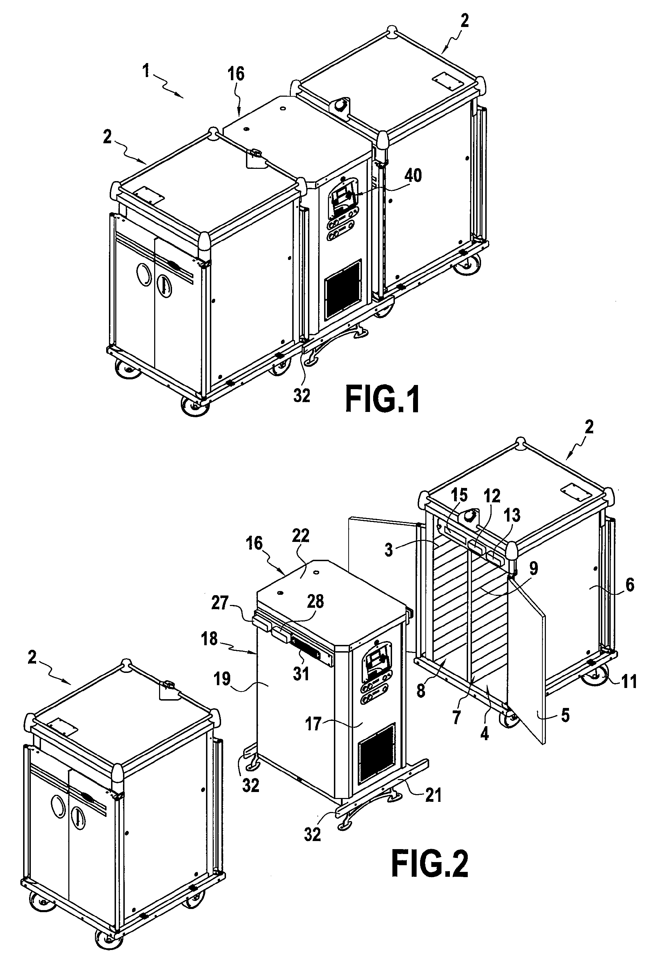

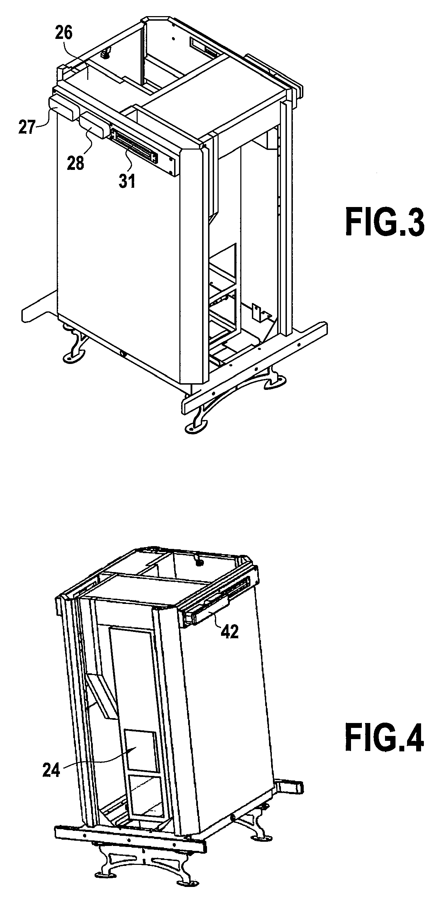

Les **Fig. 1** à **5** illustrent une première variante de réalisation d'une installation **1** adaptée pour assurer le refroidissement d'au moins un et de préférence deux chariots isothermes **2** destinés à assurer le stockage et le transport de plateaux-repas non représentés. Classiquement, chaque chariot **2** comporte une enveloppe isolée **3** délimitant au moins une enceinte **4** accessible par au moins une et dans l'exemple illustré par un double jeu de deux portes **5.** Dans l'exemple considéré, l'enceinte **4** s'ouvre selon deux faces opposées du chariot à savoir les faces avant et arrière équipées chacune de deux portes **5.** L'enceinte **4** est fermée par deux parois latérales **6** opposées disposées entre les faces avant et arrière et reliées par des parois de fond et de dessus.

L'enceinte **4** présente au moins un compartiment dit froid **7** et dans l'exemple illustré également un compartiment dit chaud **8.** Les compartiments froid **7** et chaud **8** sont séparés par une cloison verticale **9.** Les parois des compartiments **7, 8** sont munies de divers équipements et notamment de moyens de support permettant le maintien en position superposée de plateaux-repas. Bien entendu, les compartiments **7, 8** sont destinés à recevoir les parties des plateaux-repas supportant respectivement les mets froids et chauds et s'étendant ainsi de part et d'autre de la cloison de séparation **9.** A cet effet, la cloison de séparation **9** peut être pourvue de fentes superposées autorisant le passage des plateaux-repas. Le compartiment chaud **8** est muni de moyens de chauffage de mets placés dans le compartiment chaud. Ces moyens de chauffage sont réalisés par des plaques chauffantes montées de façon superposée à l'intérieur du compartiment chaud. Chaque plaque est du type à résistance chauffante ou à induction. D'une manière classique, le chariot **2** est équipé de moyens de roulement **11.**

Chaque chariot **2** est équipé sur l'une de ses faces, à savoir la face avant dans l'exemple illustré, d'au moins une bouche d'entrée d'air **12,** et d'au moins une bouche de sortie d'air **13** communiquant avec le compartiment froid **7** par des gaines **14** s'étendant par exemple dans les parois de l'enceinte voire à l'intérieur du compartiment froid **7.** Il doit être considéré que chaque bouche **12, 13** est réalisée par une ouverture ponctuelle ou localisée aménagée dans une face du chariot **2.** Dans l'exemple illustré, chaque bouche **12, 13** est aménagée dans un bandeau supérieur de la face avant surmontant les portes **5.**

Chaque chariot **2** est pourvu de moyens d'accouplement temporaire **15** avec une borne fixe **16** adaptée pour au moins refroidir ou maintenir au froid le compartiment **7.** La borne fixe **16** se présente sous la forme d'une structure parallélépipédique comportant une paroi de façade **17** s'étendant parallèlement à une paroi arrière **18** et deux parois latérales **19** parallèles entre elles et s'étendant dans l'exemple illustré aux **Fig. 1** à **5** entre les parois de façade et arrière. Les parois **17, 18** et **19** s'étendent verticalement et sont supportées par une embase **21** s'étendant parallèlement à une paroi de dessus **22.** Dans l'exemple illustré, les parois latérales **19** s'étendent en vis-à-vis ou de manière opposée.

La borne fixe **16** comporte une unité frigorifique **24** de tout type connu en soi. De manière classique, l'unité frigorifique **24** comporte un circuit de fluide frigorigène associé à un évaporateur et un condenseur et à des moyens de ventilation. L'unité frigorifique **24** est apte à créer un circuit de circulation d'air froid comportant des canalisations **26** assurant l'amenée de l'air froid de l'unité frigorifique **24** jusqu'à deux bouches de soufflage d'air froid **27** et le retour de l'air de deux bouches d'aspiration **28** jusqu'à l'unité frigorifique **24.** Avantageusement chaque paroi latérale **19** est équipée d'une bouche de soufflage d'air froid **27** et d'une bouche d'aspiration d'air **28** complémentaire respectivement à la bouche d'entrée d'air **12** et la bouche de sortie d'air **13** d'un chariot. Il doit être compris que dans une position d'accouplement entre un chariot **2** et la borne fixe **16,** une bouche d'entrée d'air **12** coopère avec une bouche de soufflage d'air froid **27** tandis qu'une bouche de sortie d'air **13** coopère avec la bouche d'aspiration d'air **28.** Dans ces conditions, l'air froid provenant de l'unité frigorifique **24** est acheminé dans le compartiment froid **7** via une canalisation **26,** une bouche de soufflage **27,** une bouche d'entrée d'air **12,** une gaine d'amenée **14** et revient à l'unité frigorifique **24** via une gaine d'amenée **14,** une bouche de sortie **13,** une bouche d'aspiration **28** et une canalisation **26.**

Bien entendu, les bouches de soufflage **27** et d'aspiration **28,** et les bouches d'entrée **12** et de sortie **13** sont adaptées pour garantir une bonne étanchéité à l'air. Ces bouches **27** et **28, 12** et **13** à caractère ponctuel ou localisé peuvent ainsi être munies d'embouts, de buses et/ou de joints d'étanchéité de tout type ou présenter des formes complémentaires d'emboîtement.

La position des bouches **12, 13, 27** et **28** est choisie de manière à obtenir la coopération entre d'une part, les bouches d'entrée **12** et de soufflage **27** et entre les bouches de sortie **13** et d'aspiration **28** d'autre part, par le simple rapprochement et mise en contact d'un chariot **2** avec la borne fixe **16.** Dans l'exemple illustré aux **figures 1** à **5****,** les bouches de soufflage **27** et d'aspiration **28** sont situées selon une disposition de symétrie centrale par rapport au plan de symétrie parallèle aux parois latérales **19.** De même, les bouches d'entrée **12** et de sortie **13** sont décalées par rapport au milieu du chariot. En d'autres termes, le décalage des bouches de soufflage **27** et d'aspiration **28,** dans un sens contraire d'une paroi à l'autre, permet le raccordement de manière indifférente sur l'une ou l'autre de ses faces, d'un chariot présentant le même décalage latérale pour les bouches d'entrée **12** et de sortie **13.** Tous les chariots **2** présentent ainsi une même disposition pour les bouches d'entrée **12** et de sortie **13** qui peuvent ainsi être indifféremment raccordées à l'une ou à l'autre des faces de la borne fixe **16.**

Selon une autre caractéristique de l'invention, la borne fixe **16** comporte les moyens d'accouplement temporaire **31** complémentaire aux moyens d'accouplement temporaire **15** d'un chariot pour assurer le maintien du chariot dans une position fixe d'accouplement dans laquelle les bouches de soufflage **27** et d'aspiration **28** se trouvent raccordées de manière étanche respectivement avec les bouches d'entrée **12** et de sortie **13.** Chaque face latérale **19** est équipée de moyens d'accouplement temporaire **31** qui sont bien entendu positionnés selon une disposition de symétrie centrale telle que décrite ci-dessus en relation des bouches d'entrée **12** et de sortie **13.** Les moyens d'accouplement temporaire **15** d'un chariot qui se trouvent décalés sont adaptés pour coopérer de manière indifférente avec les moyens d'accouplement **31** de l'une ou l'autre des faces **19** de la borne fixe **16.** Par exemple, les moyens d'accouplement temporaire **15, 31** sont réalisés par une ventouse électromagnétique.

Selon une caractéristique préférée de réalisation, la borne fixe **16** comporte pour chaque moyen d'accouplement temporaire **31,** un moyen non représenté de détection de la présence d'un chariot **2.** Ainsi la ventouse électromagnétique est activée lorsque le moyen détecte la présence d'un chariot placé dans une position pour être verrouillé avec la borne fixe, c'est-à-dire correspondant au raccordement entre les bouches. Par exemple, un tel moyen de détection est un capteur optique ou de proximité.

De préférence, la borne fixe **16** est équipée au niveau de son embase **21,** de guides **32** facilitant l'amenée et le positionnement du chariot dans sa position de contact ou de verrouillage avec la borne fixe **16.**

La borne fixe **16** comporte également une unité de commande et de régulation **40** permettant de piloter le fonctionnement de la borne fixe. Cette unité de commande et de régulation **40** comporte une interface de commande située sur la paroi de façade **17** de la borne fixe **16.** Cette unité de commande et de régulation **40** permet d'assurer le bon fonctionnement de l'installation qui découle directement de la description qui précède.

Lorsqu'un capteur détecte la présence d'un chariot, les moyens d'accouplement temporaire sont activés pour ancrer fixement le chariot à la borne fixe. Dans cette position, le compartiment froid **7** se trouve relié à l'unité frigorifique **24** qui est alors commandé pour assurer la circulation de l'air froid dans le compartiment froid **7.** L'unité de commande et de régulation **40** permet ainsi de maintenir pendant une durée déterminée une température déterminée à l'intérieur du compartiment froid **7.** Il est à noter que l'unité de commande et de régulation **40** pilote le fonctionnement des moyens de chauffage électrique du compartiment chaud **8.** A cet égard, le chariot **2** est relié à la borne fixe **16** par un cable de raccordement électrique non représenté.

Il doit être considéré que le raccordement des chariots **2** à la borne fixe **16** est réalisé de manière simple et automatique sans nécessiter notamment l'ouverture des portes **5.** Il est à noter également que la borne fixe **16** peut fonctionner lorsqu'elle se trouve raccordée à un ou deux chariots **2.** De manière avantageuse, la borne fixe **16** comporte une face prioritaire de raccordement. A cet égard lorsqu'un seul chariot **2** est raccordé à la borne fixe, une bouche d'obturation **42** est mise en place sur les bouches de soufflage **27** et d'aspiration **28** qui se trouvent situées sur la face non prioritaire de la borne fixe **16.** Ainsi, la borne fixe **16** délimite par chaque paroi latérale **19,** un espace de réception pour un chariot **2** dont la face avant ou de raccordement possède des dimensions sensiblement identiques à la paroi latérale **19.**

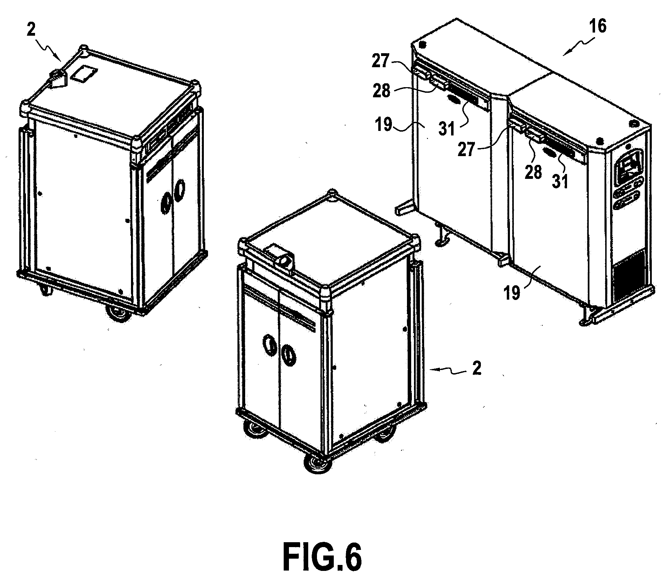

La **Fig. 6** illustre un autre mode de réalisation de la borne fixe **16** illustrée aux **Fig. 1** à **5****.** Selon ce mode de réalisation, les deux parois latérales **19** sont placées l'une à côté de l'autre pour former une face commune de raccordement pour les chariots. Les deux parois **19** s'étendent ainsi parallèlement l'une à l'autre et dans le prolongement l'une de l'autre dans l'exemple illustré. Les deux chariots **2** sont placés ainsi côte à côte lorsqu'ils sont raccordés à la borne fixe **16.** Bien entendu, la borne fixe **16** selon ce mode de réalisation reste identique à la description de la borne fixe **16** effectuée ci-dessus.

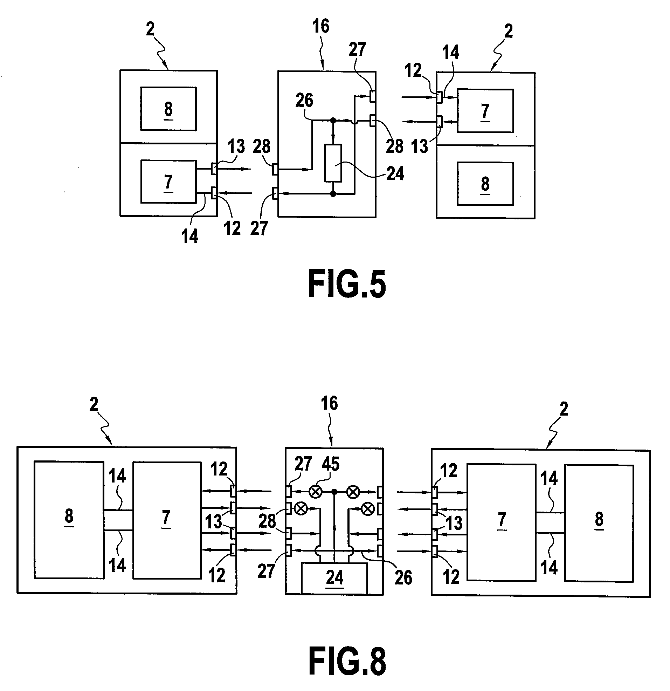

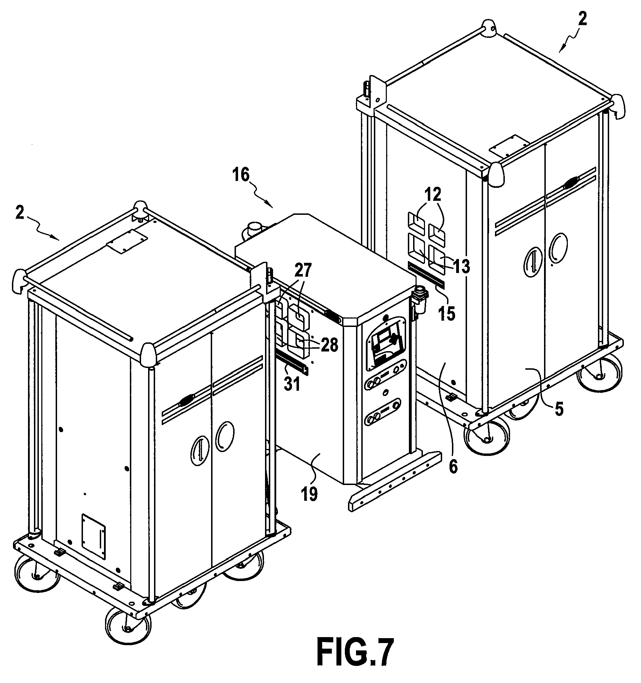

Les **Fig. 7** et **8** illustrent une autre variante de réalisation permettant de mettre en oeuvre plus précisément un mode de fonctionnement dit à double réfrigération. Selon ce mode de fonctionnement, le compartiment chaud **8** est dit mixte dans la mesure où ce compartiment est dans un premier temps refroidi simultanément au compartiment froid **7.** Lorsque les mets chauds doivent être remis en température, le refroidissement du compartiment chaud est arrêté et les moyens de chauffage ou de remise en température sont commandés en fonctionnement.

Selon cette variante de réalisation, la borne fixe **16** comporte sur chacune de ses deux parois opposées **19,** deux bouches de soufflage d'air **27** et deux bouches d'aspiration d'air **28** communiquant par des canalisations **26** avec l'unité frigorifique **24** comme décrit ci avant. De même, chaque chariot **2** comporte deux bouches d'entrée d'air **12** dont l'une communique par une gaine **14** avec le compartiment froid **7** qui communique par une gaine **14** avec une bouche de sortie **13.** L'autre bouche d'entrée d'air **12** communique par une gaine **14** avec le compartiment mixte **8** qui communique par une gaine **14** avec l'autre bouche de sortie **13.**

Selon une caractéristique préférée de réalisation, ces bouches d'entrée **12** et de sortie **13** sont aménagées sur une paroi latérale **6** du chariot. De préférence les bouches d'entrée d'air **12** sont situées à un même niveau au dessus des deux bouches de sortie d'air **13.** Selon cette disposition, les bouches de soufflage **27** et d'aspiration **28** sont situées selon une disposition de symétrie axiale par rapport au plan de symétrie parallèle aux parois latérales **19** de la borne fixe **16.** Les deux bouches de soufflage **27** sont donc situées côte à côte de manière superposée aux bouches d'aspiration **28.**

Chaque chariot **2** est pourvu des moyens d'accouplement temporaire **15** aménagé de manière centrée sur la paroi **6** dans laquelle sont aménagées les bouches **12** et **13.** De la même façon, les moyens d'accouplement temporaire **31** sont aménagés de manière centrée sur chacune des parois **19** de la borne fixe **16.**

Selon cet exemple de réalisation, il apparaît, dans un premier temps, nécessaire que l'unité frigorifique **24** puisse refroidir à la fois le compartiment froid **7** et le compartiment mixte **8.** Dans un deuxième temps, l'unité frigorifique **24** ne doit pas alimenter en air froid le compartiment mixte **8** lorsque les moyens de chauffage sont activés. Dans ce cas, des moyens d'obturation **45** tels que des volets commandés sont montés sur les canalisations **26** afin que les bouches de soufflage **27** et d'aspiration **28** ne délivrent pas d'air froid.

Dans les exemples décrits ci-dessus, le chariot **2** comporte un compartiment froid **7** et un compartiment mixte **8.** Bien entendu l'objet de l'invention peut être mis en oeuvre pour un chariot **2** comportant uniquement un compartiment froid **7.**

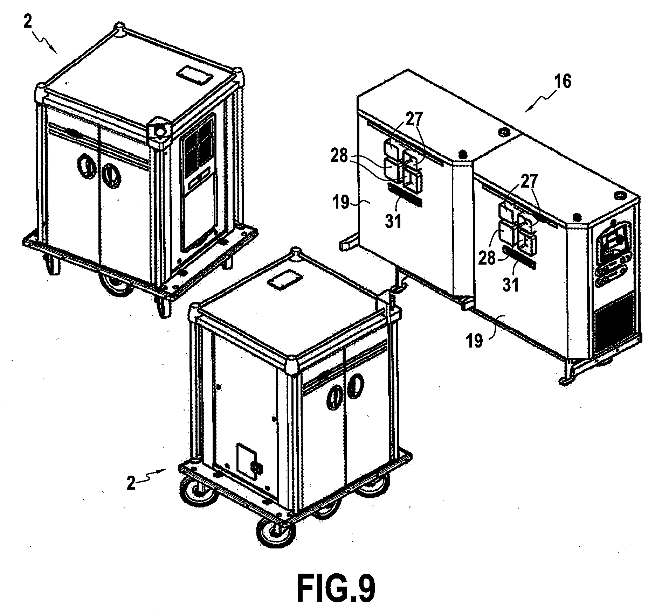

La **Fig. 9** illustre un autre mode de réalisation de la borne fixe illustrée aux **Fig. 7** et **8** et concernant le mode de fonctionnement dit à double réfrigération. Selon ce mode de réalisation, les deux parois latérales **19** sont placées l'une à côté de l'autre pour former une face commune de raccordement pour les chariots. Les deux parois **19** s'étendent ainsi parallèlement l'une à l'autre et dans le prolongement l'une de l'autre dans l'exemple illustré. Les deux chariots **2** sont placés ainsi côte à côte lorsqu'ils sont raccordés à la borne fixe **16.**

L'invention n'est pas limitée aux exemples décrits et représentés car diverses modifications peuvent y être apportées sans sortir de son cadre comme défini dans les revendications.

## Revendications

1. - Installation pour au moins le maintien au froid de mets placés sur des plateaux-repas, comportant :
• au moins deux chariots isothermes **(2)** de transports de plateaux repas comprenant chacun :
- une enveloppe isolante **(3)** délimitant au moins une enceinte **(4)** accessible par au moins une porte **(5)** et présentant au moins un compartiment froid **(7),** cette enceinte étant munie intérieurement de moyens de support en position superposée de plateaux-repas,
• une borne fixe **(16)** comportant une unité frigorifique **(24)** et une unité **(40)** de commande et de régulation du froid, **caractérisée en ce que** :
• chaque chariot est équipé sur l'une de ses faces :
- d'au moins une bouche d'entrée d'air **(12)** et d'au moins une bouche de sortie d'air **(13)** communiquant par des gaines **(14),** avec le compartiment froid,
- et des moyens d'accouplement temporaire **(15)** avec la borne fixe **(16),**
• la borne fixe **(16)** possède deux parois parallèles **(19)** équipées chacune :
- d'au moins une bouche de soufflage d'air froid **(27)** complémentaire à la bouche d'entrée d'air d'un chariot, pour coopérer entre elles lors de l'accouplement d'un chariot avec la borne fixe, les bouches de soufflage (**27**) communiquant par des canalisations **(26) avec** l'unité frigorifique (**24**),
- d'au moins une bouche d'aspiration d'air **(28),** complémentaire à la bouche de sortie d'air d'un chariot pour coopérer entre elles lors de l'accouplement d'un chariot avec la borne fixe, les bouches d'aspiration (**28**) d'air communiquant par des canalisations (**26**) avec l'unité frigorifique (**24**)
- des moyens d'accouplement temporaire **(31)** complémentaires aux moyens d'accouplement temporaire **(15)** d'un chariot, pour assurer le maintien d'un chariot dans une position fixe d'accouplement pour laquelle les bouches de soufflage **(27)** et d'aspiration **(28)** se trouvent raccordées de manière étanche respectivement avec les bouches d'entrée **(12)** et de sortie **(13),**
• l'unité de commande et de régulation (**40**) assure la commande et la régulation pour l'un et/ou l'autre des chariots accouplé(s) à la borne fixe.

2. **-** Installation selon la revendication 1, **caractérisée en ce que** chaque chariot **(2)** comprend :
• une enceinte présentant le compartiment froid **(7)** et un compartiment mixte **(8)** froid ou chaud,
• des moyens de remise en température des plateaux repas, pour le compartiment mixte **(8).**

3. **-** Installation selon la revendication 1 ou 2, **caractérisée en ce que** :
• la borne fixe **(16)** comporte, sur chacune des deux parois parallèles **(19),** une bouche de soufflage d'air froid **(27)** et une bouche d'aspiration d'air **(28),**
• chaque chariot comporte une bouche d'entrée d'air **(12)** communiquant par une gaine avec le compartiment froid **(7)** qui communique par une gaine **(14)** avec la bouche de sortie d'air **(13).**

4. **-** Installation selon la revendication 2, **caractérisée en ce que** :
• la borne fixe **(16)** comporte :
- sur chacune des deux parois parallèles **(19),** deux bouches de soufflage d'air froid **(27)** et deux bouches d'aspiration d'air **(28),**
- des moyens d'obturation **(45)** commandée d'une bouche de soufflage **(27)** et d'une bouche d'aspiration **(28)** destinées à communiquer avec le compartiment mixte d'un chariot,
• chaque chariot **(2)** comporte deux bouches d'entrée d'air **(12)** dont l'une communique par une gaine **(24)** avec le compartiment froid **(7)** qui communique par une gaine avec une bouche de sortie d'air **(13),** l'autre bouche d'entrée d'air **(12)** communiquant par une gaine **(24)** avec le compartiment mixte qui communique par une gaine avec l'autre bouche de sortie d'air **(13).**

5. **-** Installation selon l'une des revendications 1 à 4, **caractérisée en ce que** la borne fixe **(16)** comprend pour chacun des moyens d'accouplement temporaire **(31),** un moyen de détection de la présence d'un chariot, adapté pour permettre de piloter automatiquement le fonctionnement des moyens d'accouplement temporaire complémentaire lors de la détection d'un chariot en position d'être verrouillé avec la borne fixe.

6. **-** Installation selon l'une des revendications 1 à 5, **caractérisée en ce qu'**elle comporte des bouchons d'obturation **(42)** des bouches de soufflage **(27)** et d'aspiration **(28)** et des trappes d'obturation des bouches d'entrée et de sortie.

7. **-** Installation selon la revendication 2, **caractérisée en ce que** les moyens de remise en température des plateaux-repas sont des plaques chauffantes à induction ou à résistance électrique.

8. **-** Installation selon la revendication 3, **caractérisée en ce que** les bouches de soufflage **(27)** et d'aspiration **(28)** sont situées selon une disposition de symétrie centrale par rapport au plan de symétrie parallèle aux parois parallèles **(19)** s'étendant de manière opposée, tandis que les bouches d'entrée **(12)** et de sortie **(13)** sont décalées par rapport au milieu du chariot de manière à permettre leur raccordement respectivement des bouches de soufflage **(27)** et d'aspiration **(28)** de l'une ou de l'autre des parois de la borne fixe.

9. **-** Installation selon la revendication 4, **caractérisée en ce que** les bouches de soufflage **(27)** et d'aspiration **(28)** sont situées selon une disposition de symétrie axiale par rapport au plan de symétrie parallèle aux parois latérales **(19).**

10. **-** Installation selon l'une des revendications 1 à 4, **caractérisée en ce que** les deux parois parallèles **(19)** sont montées l'une à côté de l'autre.

## Patentansprüche

1. Anlage mindestens zum Kühlhalten von Speisen, die auf Esstabletts angeordnet sind, umfassend :
- mindestens zwei isotherme Wagen (2) zur Beförderung von Esstabletts, jeweils umfassend :
* eine Isolierhülle (3), die mindestens einen Raum (4) begrenzt, der durch mindestens eine Tür (5) zugänglich ist und mindestens ein kaltes Abteil (7) aufweist, wobei dieser Raum innen mit Mitteln zum Tragen von Esstabletts in übereinander angeordneter Position versehen ist;
- eine feste Klemme (16), umfassend eine Kühleinheit (24) und eine Einheit (40) zur Steuerung und Einstellung der Kälte, **dadurch gekennzeichnet, dass** :
- jeder Wagen auf einer seiner Seiten versehen ist mit:
* mindestens einer Lufteinlassöffnung (12) und mindestens einer Luftauslassöffnung (13), die durch Stutzen (14) mit dem kalten Abteil in Verbindung stehen ;
* und Mitteln zur vorübergehenden Kopplung (15) mit der festen Klemme (16);
- wobei die feste Klemme (16) zwei Seitenwände (19) umfasst, die jeweils ausgestattet sind mit:
* mindestens einer Kaltlufteinblasöffnung (27), die zu der Lufteinlassöffnung eines Wagens komplementär ist, um mit ihr bei der Kopplung eines Wagens mit der festen Klemme zusammenzuwirken, wobei die Blasöffnungen (27) durch Kanalisationen (26) mit der Kühleinheit (24) in Verbindung stehen ;
* mindestens einer Luftansaugöffnung (28), die zu der Luftauslassöffnung eines Wagens komplementär ist, um mit dieser bei der Kopplung eines Wagens mit der festen Klemme zusammenzuwirken, wobei die Luftansaugöffnungen (28) durch Kanalisationen (26) mit der Kühleinheit (24) in Verbindung stehen ;
* vorübergehende Kopplungsmittel (31), die zu den vorübergehenden Kopplungsmitteln (15) eines Wagens komplementär sind, um das Halten eines Wagens in einer festen Kopplungsposition, in der die Blas- (27) und Ansaugöffnungen (28) dicht an die Einlass- (12) bzw. Auslassöffnungen (13) angeschlossen sind, zu gewährleisten ;
- wobei die Einheit zur Steuerung und Einstellung (40) die Steuerung und die Einstellung für den einen und/oder den anderen der Wagen, die an die feste Klemme gekoppelt sind, gewährleistet.

2. Anlage nach Anspruch 1, **dadurch gekennzeichnet, dass** jeder Wagen (2) umfasst:
- einen Raum, der das kalte Abteil (7) und ein gemischtes Abteil (8) kalt oder warm aufweist;
- Mittel zum Aufwärmen der Esstabletts für das gemischte Abteil (8).

3. Anlage nach Anspruch 1 oder 2, **dadurch gekennzeichnet, dass** :
- die feste Klemme (16) auf jeder ihrer beiden parallelen Wände (19) eine Kaltluftblasöffnung (27) und eine Luftansaugöffnung (28) umfasst;
- jeder Wagen eine Lufteinlassöffnung (12) umfasst, die durch einen Stutzen mit dem kalten Abteil (7) in Verbindung steht, das durch einen Stutzen (14) mit der Luftauslassöffnung (13) in Verbindung steht.

4. Anlage nach Anspruch 2, **dadurch gekennzeichnet, dass** :
- die feste Klemme (16) umfasst:
* auf jeder der beiden parallelen Wände (19) zwei Kaltluftblasöffnungen (27) und zwei Luftansaugöffnungen (28);
* Mittel (45) für den gesteuerten Verschluss einer Blasöffnung (27) und einer Ansaugöffnung (28), die dazu bestimmt sind, mit dem gemischten Abteil des Wagens in Verbindung zu stehen ;
- jeder Wagen (2) zwei Lufteinlassöffnungen (12) umfasst, von denen eine durch einen Stutzen (24) mit dem kalten Abteil (7) verbunden ist, das durch einen stützen mit einer Luftauslassöffnung (13) in Verbindung steht, wobei die andere Lufteinlassöffnung (12) durch einen Stutzen (24) mit dem gemischten Abteil verbunden ist, das durch einen Stutzen mit der anderen Luftauslassöffnung (13) in Verbindung steht.

5. Anlage nach einem der Ansprüche 1 bis 4, **dadurch gekennzeichnet, dass** die feste Klemme (16) für jedes der Mittel zur vorübergehenden Kopplung (31) ein Mittel zur Erfassung des Vorhandenseins eines Wagens umfasst, das dazu vorgesehen ist, es zu ermöglichen, automatisch die Funktion der Mittel zur komplementären vorübergehenden Kopplung bei der Erfassung eines Wagens in einer Position, um mit der festen Klemme verriegelt zu werden, zu steuern.

6. Anlage nach einem der Ansprüche 1 bis 5, **dadurch gekennzeichnet, dass** sie Verschlussstöpsel (42) der Blas- (27) und Ansaugöffnungen (28) und Verschlussklappen der Einlass- und Auslassöffnungen umfasst.

7. Anlage nach Anspruch 2, **dadurch gekennzeichnet, dass** die Mittel zum Aufwärmen der Esstabletts Heizplatten mit Induktion oder elektrischem Widerstand sind.

8. Anlage nach Anspruch 3, **dadurch gekennzeichnet, dass** die Blas- (27) und Ansaugöffnungen (28) in einer zentralen symmetrischen Anordnung in Bezug zur Symmetrieebene parallel zu den parallelen Wänden (19), die sich entgegengesetzt erstrecken, angeordnet sind, während die Einlass- (12) und Auslassöffnungen (13) in Bezug zur Mitte des Wagens versetzt sind, um den Anschluss der Blas- (27) bzw. Ansaugöffnungen (28) der einen oder der anderen der Wände der festen Klemme zu ermöglichen.

9. Anlage nach Anspruch 4, **dadurch gekennzeichnet, dass** die Blas- (27) und Ansaugöffnungen (28) in einer Anordnung axialer Symmetrie in Bezug zur Symmetrieebene parallel zu den Seitenwänden (19) angeordnet sind.

10. Anlage nach einem der Ansprüche 1 bis 4, **dadurch gekennzeichnet, dass** die beiden parallelen Wände (19) nebeneinander montiert sind.

## Claims

1. **-** An installation for at least keeping meals placed on meal trays cold, including ;
• at least two isothermal carts **(2)** for transporting meal trays each comprising :
- an insulating enclosure **(3)** defining at least one chamber **(4)** accessible via at least one door **(5)** and having at least one cold compartment **(7),** this chamber being provided inwardly with superimposed support means for keeping the meal trays in position ;
• a fixed terminal **(16)** including a refrigeration unit **(24)** and a cold control and regulating unit **(40), characterized in that**:
• each cart is equipped on one of its faces with :
- at least one air inlet mouth **(12)** and at least one air outlet mouth **(13)** communicating by sheaths **(14),** with the cold compartment, and
- temporary coupling means **(15)** with the fixed terminal **(16) ;**
• the fixed terminal **(16)** has two parallel walls **(19)** each equipped with :
- at least one cold air blowing mouth **(27)** complementary to the air inlet mouth of a cart, to cooperate with them during the coupling of a cart with the fixed terminal, the blowing mouths **(27)** communicating by channels **(26)** with the refrigeration unit **(24) ;**
- at least one air suction mouth **(28),** complementary to the air outlet mouth of a cart to cooperate with one another during the coupling of a cart with the fixed terminal, the air suction mouth **(28)** communicating by channels **(26)** with the refrigeration unit **(24);**
- temporary coupling means **(31),** complementary with the temporary coupling means **(15)** of a cart, to keep a cart in a fixed coupling position for which the blowing **(27)** and suction **(28)** mouths are tightly connected with the inlet **(12)** and outlet **(13)** mouths, respectively ;
• the control and regulating unit **(40)** controls and regulates one and/or the other of the carts coupled to the fixed terminal.

2. **-** The installation according to claim 1, **characterized in that** each cart **(2)** comprises :
• a chamber having the cold compartment **(7)** and a mixed cold or hot compartment **(8);**
• means for restoring the temperature of the meal trays, for the mixed compartment **(8).**

3. -The installation according to claim 1 or 2, **characterized in that**:
• the fixed terminal **(16)** includes, on each of the two parallel walls **(19),** a cold air blowing mouth **(27)** and an air suction mouth **(28);**
• each cart includes an air inlet mouth **(12)** communicating by a sheath with the cold compartment **(7),** which communicates by a sheath **(14)** with the air outlet mouth **(13).**

4. -The installation according to claim 2, **characterized in that**:
• the fixed terminal **(16)** includes :
- on each of the two parallel walls **(19),** two cold air blowing mouths **(27)** and two air suction mouths **(28);**
- controlled closing off means **(45)** of a blowing mouth **(27)** and a suction mouth **(28)** intended to communicate with the mixed compartment of a cart ;
• each cart **(2)** includes two air Inlet mouths **(12),** one of which communicates by a sheath **(24)** with the cold compartment **(7),** which communicates by a sheath with an air outlet mouth **(13),** the other air outlet mouth **(12)** communicating by a sheath **(24)** with the mixed compartment, which communicates by a sheath with the other air outlet mouth **(13).**

5. -The installation according to one of claims 1 to 4, **characterized in that** the fixed terminal **(16)** comprises, for each of the temporary coupling means **(31),** means for detecting the presence of a cart, suitable for allowing automatic piloting of the operation of the complementary temporary coupling means when a cart is detected in position to be locked with the fixed terminal.

6. -The installation according to one of claims 1 to 5, **characterized in that** it includes closing off stoppers **(42)** for the blowing **(27)** and suction **(28)** mouths and hatches for closing off the inlet and outlet mouths.

7. **-** The installation according to claim 2, **characterized in that** the means for restoring the temperature of the meal trays are induction or electrical resistance hot plates.

8. **-** The installation according to claim 3, **characterized in that** the blowing **(27)** and suction **(28)** mouths are situated in a central symmetrical arrangement relative to the plane of symmetry parallel to the parallel walls **(19)** extending opposite, while the inlet **(12)** and outlet **(13)** mouths are offset relative to the middle of the cart so as to allow them to be connected respectively to the blowing **(27)** and suction **(28)** mouths of one or the other of the walls of the fixed terminal.

9. **-** The installation according to claim 4, **characterized in that** the blowing **(27)** and suction **(28)** mouths are situated in an axially symmetrical arrangement relative to the plane of symmetry parallel to the side walls **(19).**

10. - The installation according to one of claims 1 to 4, **characterized in that** the two parallel walls **(19)** are mounted next to one another.
